# EUROPÄISCHE PATENTSCHRIFT

(11) **EP 0 803 333 B1**
(45) Veröffentlichungstag und Bekanntmachung des Hinweises auf die Patenterteilung: **18.10.2000**
(21) Anmeldenummer: 96118579.0
(22) Anmeldetag: 20.11.1996
(51) Int. Cl.: B25D 17/00, B25D 17/02, F16B 13/06, F16B 13/08

(54) **Lochschlag- und Ankerstezwerkzeug für poröses Mauerwerk**
Tool for making a hole and for inserting an anchor in a porous masonry
Outil pour percer un trou et insérer une cheville d'ancrage dans une maçonnerie poreuse

(30) Priorität: 28.03.1996 DE 19612277
(43) Veröffentlichungstag der Anmeldung: 29.10.1997
(73) Patentinhaber: fischerwerke Artur Fischer GmbH & Co. KG, D-72178 Waldachtal (DE)
(72) Erfinder: Fischer, Artur, Prof. Dr. h.c. Dr.-Ing. E.h., 72178 Waldachtal (DE)

(56) Entgegenhaltungen:
- EP-A- 0 422 377
- DE-A- 3 639 838
- DE-U- 8 616 598
- DE-U- 9 002 569

## Beschreibung

Die Erfindung betrifft ein Werkzeug zum Herstellen eines Lochs in porösem Mauerwerk wie Gasbeton und zum Setzen eines Spreizankers in dem Loch mit den Merkmalen des Oberbegriffs des Anspruchs 1.

Aus der DE-U-86 16 598 ist ein Werkzeug zum Setzen eines Spreizankers in einem Bohrloch bekannt. Das bekannte Werkzeug weist eine Hülse mit einer Bohrung als Aufnahme für den Spreizanker sowie einen Schaft zum Einspannen des Werkzeugs in einen Bohrhammer auf. Mit dem in den Bohrhammer eingespannten Werkzeug wird ein in das Werkzeug eingesetzter Spreizanker in ein zuvor gebohrtes Bohrloch eingetrieben, bis die Hülse des Werkzeugs auf einer Oberfläche eines Mauerwerks oder dgl., in das das Bohrloch gebohrt ist, aufsitzt. Das bekannte Werkzeug hat den Nachteil, daß das Bohrloch für den Spreizanker mit einem separaten Werkzeug hergestellt werden muß. Weiterer Nachteil des bekannten Werkzeugs ist, daß der Spreizanker nach dem Setzen aus dem Bohrloch vorsteht und nicht bündig oder versenkt gesetzt werden kann.

Der Erfindung liegt die Aufgabe zugrunde, ein Werkzeug der vorstehend genannten Art so auszubilden, daß es auf einfache Weise das Schlagen eines Lochs definierter Tiefe und ein Setzen des Spreizankers in auf die Tiefe des Lochs abgestimmter Setztiefe ermöglicht.

Diese Aufgabe wird erfindungsgemäß durch die Merkmale des Anspruchs 1 gelöst. Das erfindungsgemäße Werkzeug weist einen Dorn zum Einschlagen in das poröse Mauerwerk auf. Gegenüber dem Bohren eines Lochs hat das Einschlagen eines Dorns den Vorteil, daß das Mauerwerk im Bereich des Lochs verdichtet und damit verfestigt wird und dadurch dem zu setzenden Spreizanker besseren Halt gibt. Weiterer Vorteil ist, daß kein Bohrmehl aus dem Loch entfernt werden muß.

In vorgegebenem Abstand von einem vorderen Ende des Dorns weist das Werkzeug erfindungsgemäß eine Tiefenmarkierung auf, die das Erreichen einer vorgesehenen Lochtiefe anzeigt, wenn sie beispielsweise bündig mit einer Oberfläche des Mauerwerks ist.

Vorzugsweise im Bereich eines vorderen Ende des Dorns, evtl. aber auch an einem diesem abgewandten Ende des Werkzeugs, weist das Werkzeug eine Aufnahme für den zu setzenden Spreizanker auf. Die Aufnahme ist beispielsweise zum Aufstecken des Spreizankers ausgebildet. Insbesondere fixiert sie den Spreizanker in axialer Richtung am Werkzeug in definiertem Abstand von einer zweiten Tiefenmarkierung, die das Erreichen einer vorgesehenen Setztiefe des Spreizankers im Bohrloch anzeigt, wenn sie beispielsweise bündig mit der Oberfläche des Mauerwerks ist. Die Erfindung hat den Vorteil, daß das Herstellen des Lochs und das Setzen des Spreizankers mit einem Werkzeug möglich ist. Zusätzlich hat die Erfindung den Vorteil, daß die Lochtiefe und die Setztiefe des Spreizankers aufeinander abgestimmt sind. Es wird also weder der Spreizanker tiefer als vorgesehen eingetrieben, was zu zu großer Spreizung des Spreizankers und infolgedessen zu Rißbildung im Spreizanker führen kann. Die Verankerungskraft würde dadurch verringert. Der Spreizanker kann zerstört werden. Zum anderen vermeidet die Erfindung eine zu geringe Setztiefe des Spreizankers, wodurch der Spreizanker weniger als vorgesehen aufgespreizt würde und dadurch seine Verankerungskraft im Mauerwerk verringert wäre.

In bevorzugter Ausgestaltung der Erfindung ist die erste Tiefenmarkierung als Tiefenanschlag beispielsweise in Form eines Bundes am Werkzeug ausgebildet. Der Dorn des Werkzeugs läßt sich dadurch in das Mauerwerk einschlagen, bis der Tiefenanschlag an der Oberfläche des Mauerwerks anliegt.

Das vordere Ende des Dorns ist vorzugsweise spitz zulaufend nach Art eines Nagels ausgebildet. Dadurch verringert sich der Eintreibwiderstand. Des weiteren wird das Material des Mauerwerks beim Eintreiben des Dorns radial nach außen gedrängt, das Mauerwerk also im Umfangsbereich des Lochs verdichtet und damit verfestigt. Des weiteren führt die Spitze den Dorn beim Eintreiben in das Mauerwerk.

Die Erfindung wird nachfolgend anhand eines in der Zeichnung dargestellten Ausführungsbeispiels näher erläutert.

Es zeigen:
- Figur 1: ein erfindungsgemäßes Werkzeug;
- Figur 2: das Eintreiben eines Spreizankers mit dem erfindungsgemäßen Werkzeug aus Figur 1; und
- Figur 3: den vollständig eingetriebenen Spreizanker aus Figur 2.

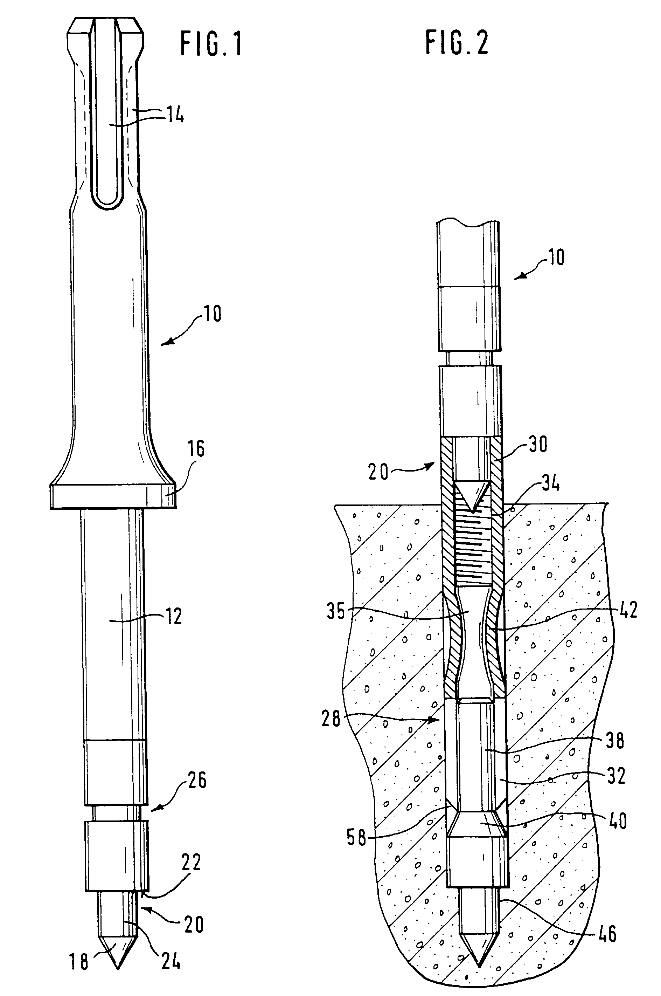

Das in Figur 1 dargestellte, insgesamt mit 10 bezeichnete, erfindungsgemäße Werkzeug hat die Form eines Dorns 12 und ist zum Spannen in einem nicht dargestellten Schnellspann-Bohrfutter mit Nuten 14 an seinem hinteren Ende ausgebildet. In seinem Mittelbereich weist der Dorn 12 einen mit ihm einstückigen Bund 16 als Tiefenanschlag auf. Ein vorderes Ende 18 des Dorns 12 ist nagelartig angespitzt. Mit dem erfindungsgemäßen Werkzeug 10 läßt sich ein zylindrisches Sackloch definierter Tiefe in einem porösen Mauerwerk, beispielsweise in Gasbeton, durch Einschlagen des Dorns 12, beispielsweise mit einem Hammer bis der Tiefenanschlag 16 an einer Oberfläche des Mauerwerks zur Anlage kommt, herstellen. Auch eignet sich das erfindungsgemäße Werkzeug 10 zum Eintreiben in ein poröses Mauerwerk mit einer ansich bekannten Schlagbohrmaschine oder einem Bohrhammer unter Verwendung deren Schlagwerke, wobei die Drehbewegung von Bohrmaschine oder Bohrhammer beim Eintreiben nicht stören.

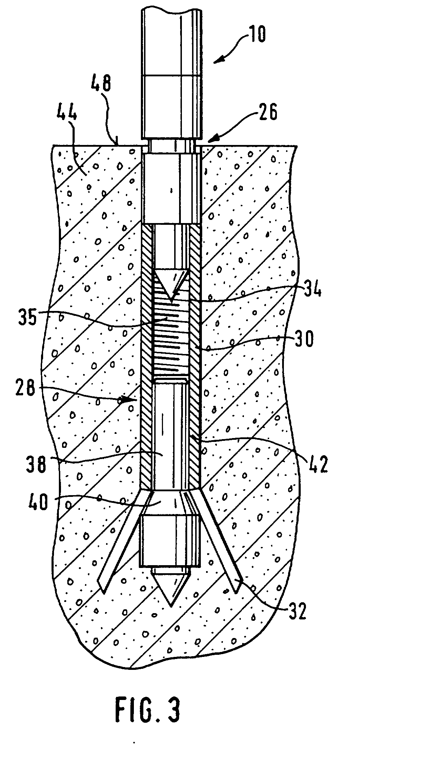

Am vorderen Ende des Dorns 12 ist eine Aufnahme 20 für einen in Figuren 2 und 3 dargestellten Spreizanker 28 ausgebildet. Die Aufnahme 20 weist eine Ringstufe 22 auf, an der sich der Dorn 12 nach vorn verjüngt und an der er in einen kurzen zylindrischen Fortsatz 24 übergeht, der mit der Spitze 18 abschließt. Die Ringstufe 22 bildet einen Anschlag für den Spreizanker 28, der diesen beim Setzen in ein mit dem Dorn 12 hergestelltes Loch in axialer Richtung am Dorn 12 fixiert. Die Ringstufe 22 hat einen definierten axialen Abstand zu einer umlaufenden Nut 26, welche in definiertem Abstand hinter der Ringstufe 22 am Dorn 12 angebracht ist.

Des weiteren formt die Ringstufe 22 des Dorns 12 eine komplementäre Ringstufe nahe dem Grund eines mit dem erfindungsgemäßen Werkzeug 10 hergestellten Lochs. Die Ringstufe 22 hat definierten Abstand in axialer Richtung vom Tiefenanschlag 16, so daß sich die komplementäre Ringstufe des hergestellten Lochs in exakt festgelegter Tiefe unter einer Oberfläche eines Mauerwerks befindet.

Der Fortsatz 24 der Aufnahme 20 ist zum Aufstecken des Spreizankers 28 vorgesehen und richtet diesen fluchtend mit dem Dorn 12 aus.

Das in Figur 1 dargestellte, erfindungsgemäße Werkzeug 10 ist zum Setzen eines Spreizankers 28 vorgesehen, wie der in Figuren 2 und 3 dargestellt ist. Dieser Spreizanker 28 umfaßt einen hohlzylindrischen Ankerkörper 30, von dem nach vorn Spreizzungen 32 in Längsrichtung abstehen. Der Ankerkörper 30 ist aus einem rechteckigen, zu einem Hohlzylinder umgeformten Blechteil hergestellt, an dessen vorderen Ende die Spreizzungen 32 durch Schlitzen in Längsrichtung ausgebildet sind. In seinem hinteren Bereich ist der Ankerkörper 30 mit einem Innengewinde 34 zum Befestigen eines Gegenstandes am Spreizanker 28 nach dem Setzen versehen. Der Innenraum des Ankerkörpers 30 bildet Ausnehmung 35 zur Aufnahme und Führung eines Schafts 38 eines Spreizkörpers 40.

Zwischen den Spreizzungen 32 ist der Schaft 38 des Spreizkörpers 40 mit konischem Spreizbereich aufgenommen, der nach vorn über die Spreizzungen 32 vorsteht. Anstatt rotationssymmetrisch kann der Spreizkörper 40 beispielsweise auch keilförmig mit einem zungenförmigen Schaft rechteckigen Querschnitts ausgebildet sein (nicht dargestellt).

Der Ankerkörper 30 weist eine Querschnittsverengung 42 in einem Bereich hinter dem Ende des Schafts 38 des Spreizkörpers 40 auf, wenn sich dieser vor den Spreizzungen 32 befindet. Die Querschnittsverengung 42 kann umlaufend beispielsweise durch Rollen oder auch an einer oder mehreren Stellen des Umfangs durch Eindrücken hergestellt sein.

Zum Setzen des Spreizankers 28 in porösem Mauerwerk 44, in welchem ein Sackloch definierter Tiefe mit dem Werkzeug 10 hergestellt worden ist, wird der Spreizanker 28 auf die Aufnahme 20 des Werkzeugs 10 aufgesetzt und in das mit dem Werkzeug 10 hergestellte Sackloch eingeführt und eingetrieben. Sobald der Spreizkörper 40 an der Ringstufe 46, welche die Ringstufe 22 des Werkzeugs 10 nahe dem Lochgrund im Loch gebildet hat, zur Anlage kommt, wird der Spreizkörper 40 von dieser Ringstufe 46 zurückgehalten.

Beim weiteren Eintreiben des Spreizankers 28 gleiten die Spreizzungen 32 am konischen Spreizkörper 40 auf und werden von diesem schräg auseinandergespreizt. Die Spreizzungen 32 dringen durch eine Umfangswandung des Lochs in das Mauerwerk 44 ein, wie es in Figur 3 dargestellt ist. Beim Aufspreizen der Spreizzungen 32 dringt der Spreizkörper 40 tiefer in das Loch ein, was durch Vergleich von Figuren 2 und 3 erkennbar ist. Dies schadet jedoch der Verankerung des Spreizankers 28 im Mauerwerk 44 nicht. Der Spreizanker 28 hat seine vorgesehene Spreizstellung erreicht, wenn die zweite Tiefenmarkierung 26 des Werkzeugs 10 bündig mit einer Oberfläche 48 des Mauerwerks 44 ist. Auf diese Weise wird sichergestellt, daß der Spreizanker 28 wie vorgesehen im Mauerwerk 44 verankert ist. Weder wird er zu tief eingetrieben, was zu einer ungewünschen Aufweitung des Ankerkörpers 30 und zur Rißbildung zwischen den Spreizzungen 32 führen kann, noch wird der Spreizanker 28 zuwenig eingetrieben und seine Spreizzungen 32 infolgedessen zu gering aufgespreizt.

Beim Aufspreizen der Spreizzungen 32 gelangt der Schaft 38 des Spreizkörpers 40 in die Querschnittsverengung 42 des Ankerkörpers 30, welche eine Klemmverbindung mit dem Schaft 38 bildet und den Spreizkörper 40 im Ankerkörper 30 fixiert, so daß sich der Spreizkörper 40 nicht vom Ankerkörper 30 lösen und aus den Spreizzungen 32 herausbewegen kann. Dadurch ist sichergestellt, daß der Spreizanker 28 formschlüssig im Mauerwerk 44 verankert ist und die Spreizzungen 32 nicht am Spreizkörper 40 entlang aus dem Mauerwerk 44 herausgezogen werden können. Die die Klemmverbindung bildende Querschnittsverengung 42 verbindet den Spreizkörper 40 auch dann zuverlässig mit dem Ankerkörper 30, wenn dieser durch das Aufspreizen seiner Spreizzungen 32 aufgeweitet wird. Ein solches Aufweiten ist möglich, wenn der Ankerkörper 28 wie im Ausführungsbeispiel aus einem zu einem Hohlzylinder umgeformten Blech mit einem durchgehenden Längsschlitz besteht.

Nach dem Setzen des Spreizankers 28 läßt sich das Werkzeug 10 herausziehen und durch Eindrehen einer nicht dargestellten Schraube in das Innengewinde 34 ein Gegenstand am Mauerwerk 44 befestigen. Die axialen Abstände von Ringstufe 22, zweiter Tiefenmarkierung 26 und Tiefenanschlag 16 am Dorn 12 des Werkzeugs 10 sind so aufeinander abgestimmt, daß die Spreizzungen 32 wie vorgesehen aufgespreizt sind, wenn der Spreizanker 28 soweit mit dem Werkzeug 10 in ein Loch im Mauerwerk 40 eingetrieben worden ist, daß seine zweite Tiefenmarkierung 26 mit der Oberfläche 48 des Mauerwerks 44 bündig ist, nachdem das Loch durch Eintreiben des Werkzeugs 10 in das Mauerwerk 44 bis zum Tiefenanschlag 16 hergestellt worden ist. Der Spreizanker 28 wird ein definiertes Stück unter die Oberfläche 48 des Mauerwerks 44 versenkt eingetrieben, damit er durch Eindrehen einer Schraube beim Befestigen eines Gegenstandes in Richtung zur Oberfläche 48 des Mauerwerks 44 gezogen werden kann, bis er festen Halt gibt.

## Patentansprüche

1. Werkzeug zum Herstellen eines Lochs in porösem Mauerwerk und zum Setzen eines Spreizankers (28) im Loch, wobei das Werkzeug (10) eine Aufnahme (20) für den Spreizanker (28) aufweist, dadurch gekennzeichnet, daß das Werkzeug (10) einen Dorn (12) zum Eintreiben in das Mauerwerk (44), eine erste Tiefenmarkierung (16) in festgelegtem Abstand zu einem vorderen Ende (18) des Dorns (12), die das Erreichen einer vorgesehenen Lochtiefe anzeigt, und eine zweite Tiefenmarkierung (26) in festgelegtem Abstand zur Aufnahme (20) für den Spreizanker (28), die eine vorgesehene Setztiefe des Spreizankers (28) angibt, aufweist.

2. Werkzeug nach Anspruch 1, **dadurch gekennzeichnet**, daß die erste Tiefenmarkierung als Tiefenanschlag (16) ausgebildet ist.

3. Werkzeug nach Anspruch 1, **dadurch gekennzeichnet**, daß der Dorn (12) eine Spitze (18) an seinem vorderen Ende aufweist.

## Claims

1. Tool for making a hole in porous masonry and for setting an expansible anchor (28) in the hole, the tool (10) having a receiver (20) for the expansible anchor (28), **characterised in that** the tool (10) has a spike (12) for driving into the masonry (44), a first depth marker (16) at a defined distance from a forward end (18) of the spike (12), which first depth marker indicates that an intended hole depth has been reached, and a second depth marker (26) at a defined distance from the receiver (20) for the expansible anchor (28), which second depth marker indicates an intended setting depth of the expansible anchor (28).

2. Tool according to claim 1, **characterised in that** the first depth marker is in the form of a depth stop (16).

3. Tool according to claim 1, **characterised in that** the spike (12) has a point (18) at its forward end.

## Revendications

1. Outil pour réaliser un trou dans une maçonnerie poreuse et pour insérer une cheville d'ancrage (28) dans le trou, l'outil (10) présentant une partie réceptrice (20) pour la cheville d'ancrage (28), **caractérisé** en ce que l'outil (10) présente un poinçon (12) à enfoncer dans la maçonnerie (44), un premier repère de profondeur (16) à une distance définie d'une extrémité avant (18) du poinçon (12), repère qui indique l'atteinte d'une profondeur de trou prévue, et un second repère de profondeur (26) à une distance définie de la partie réceptrice (20) pour la cheville d'ancrage (28), repère qui indique une profondeur prévue d'insertion de la cheville d'ancrage (28).

2. Outil selon la revendication 1, **caractérisé** en ce que le premier repère de profondeur est réalisé sous forme de butée de profondeur (16).

3. Outil selon la revendication 1, **caractérisé** en ce que le poinçon (12) présente une pointe (18) à son extrémité avant.
